# EUROPEAN PATENT SPECIFICATION

(11) **EP 4 538 828 B1**
(45) Date of publication and mention of the grant of the patent: **08.07.2026**
(21) Application number: 23383051.2
(22) Date of filing: 13.10.2023
(51) Int. Cl.: G06F 1/12, G06F 1/14, G06F 1/20, G06N 3/044, G06N 3/09, H04J 3/06

(54) **METHOD FOR DISCIPLINING A CLOCK**
VERFAHREN ZUR DISZIPLINING EINER UHR
PROCÉDÉ DE DISCRIMINATION D'UNE HORLOGE

(43) Date of publication of application: 16.04.2025
(73) Proprietor: Safran Electronics & Defense Spain Sociedad Limitada, 18014 Granada (ES)
(72) Inventor: ROS VIDAL, Eduardo, 77550 MOISSY-CRAMAYEL (FR); DIAZ ALONSO, Javier, 77550 MOISSY-CRAMAYEL (ES); RODRIGUEZ GOMEZ, Rafael, 77550 MOISSY-CRAMAYEL (FR)
(74) Representative: Cabinet Camus Lebkiri

(56) References cited:
- US-A1- 2013 046 497
- US-A1- 2021 382 157
- US-A1- 2023 315 025
- US-B1- 7 015 762
- CECCARELLI ANDREA ET AL: "Time and Resilient Master Clocks in Cyber-Physical Systems", 18 December 2016, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 165 - 185, ISBN: 978-3-540-74549-5, XP047365211

## Description

### TECHNICAL FIELD

The technical field of the invention is the one of clock disciplining.

The present invention regards a method for disciplining a clock and in particular a method for disciplining a local clock with a reference clock based on an inverse dynamics model of the local clock.

### STATE OF THE ART

Precision timing is an essential component of modern communications and navigation systems. For example, precision timing may be required for stock exchanges, computer network management or for aircrafts management. Furthermore, in time-critical distributed systems applications it is necessary to steer all local system oscillators to synchronize with a reference clock. In these applications, it is often valuable to form a composite clock, which exploits both the short-term stability of a local clock and the long-term accuracy of a reference clock. The local ensemble is generated by a technique known as "disciplining" in which the timing output of a local clock is compared to that of the reference clock and the frequency of the local clock is steered into compliance with the reference clock and periodic time reference signals such as 1 Pulse Per Second, noted PPS, are generated so that they are aligned with the ones of the reference clock. By "frequency of the clock", it is meant frequency of the oscillator of the clock. Indeed, a clock comprises an oscillator which produces a periodic signal used to compute the time of the clock. In other words, the disciplining of a local clock consists of synchronizing the local clock with a reference clock. The reference and local clocks are also frequently named respectively as "leader" and "follower" clocks. Obviously, a reference clock, to subsequent local clocks in a hierarchical network, may also be disciplined with its own reference clock, i.e., on upper layers. Said differently, one clock may be:
- the reference clock, i.e., leader clock of one or more local clocks, i.e., follower clocks, and in the meantime
- the local clock, i.e., follower, to be disciplined with a reference clock, i.e., Leader.

There are different techniques for disciplining a clock. A first technique is based on Ethernet protocols, such as NTP for Network Time Protocol and/or PTP for Precision Time Protocol and/or WRP for White Rabbit Protocol. These Ethernet protocols allow using the general-purpose data links for timing and synchronization as well as for general purpose data exchanges, Ethernet traffic.

In this first technique based on Ethernet protocols, a network comprises a reference clock (leader) and one or more local clocks (followers). Ethernet packets with time stamps from the reference clock are sent via the network in order to synchronize the local clocks. By "synchronize", it is meant that the time of each local clock is modified to match as accurately as possible with the time of the reference clock.

A second technique for disciplining a clock is based on GNSS, for "Global navigation satellite system", time receivers. These GNSS time receivers receive two signals. The first signal comprises the time reference of the satellites of different constellations, such as GPS, for "Global Positioning System", or Galileo, and reproduce the time reference usually with a frequency signal of 10 megahertz, noted MHz. The second signal is a periodic triggering signal of 1 PPS. These two signals are usually received by a clock to be disciplined comprised in a network of clocks. Then, once the clock is disciplined, i.e., it produces 1 PPS signals aligned with the ones of the reference clock, it can be used as the reference clock to discipline other local clocks also comprised in the network, for instance, through the Ethernet techniques indicated above. Usually, the quality of the synchronization is measured on how the 1 PPS signal of the follower clock is aligned with the 1PPS signal of the reference clock, i.e., leader clock.

A clock may be in "hold over" state or in a "sync" state or in a "lock" state. In "hold over" state, the clock has no external timing reference available. A clock may be in "hold over" state because its connection with the reference clock is broken or because its reference clock was also in "hold over" state during some time and needed to be disciplined to its own reference clock in order to be valid again until it becomes a valid reference it may not be act as reference clock, i.e., leader, to other local, i.e. follower, clocks. Therefore, when a clock is running in "hold over" state, the internal oscillator frequency drifts away from its reference clock. The drift away may be caused by different factors such as temperature and aging of the local clock. In "sync" state, a clock is in connection with the reference clock, therefore the internal oscillator frequency is regularly synchronized with the reference clock. After being in "hold over" state, it needs to be disciplined, or more precisely "re-disciplined", with the reference clock in order to switch to "sync" state. The "lock" state of a clock corresponds to a state when the internal oscillator frequency of the clock is maintained with a certain alignment threshold with its reference clock. This "lock" state is pre-required to achieve "sync" state in which regular corrections are applied to finely synchronize the local clock as well as possible.

Typically, there are two situations in which a clock needs to be disciplined with a reference clock:
- when a clock switches to a new reference clock, and/or
- when a reference clock becomes available again and the clock needs to steer its oscillator frequency back to match the external reference, and then change to "sync" state.

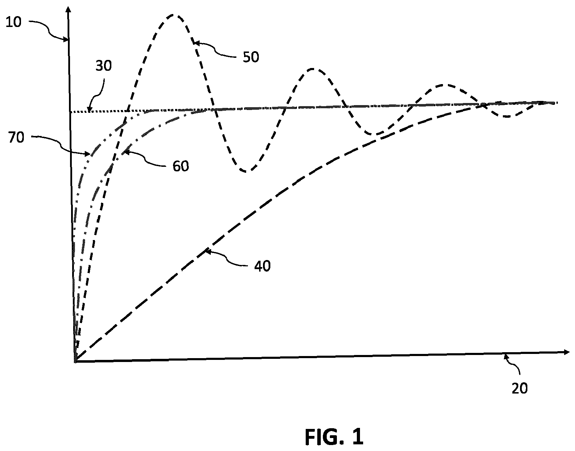

In order to discipline a local clock with a reference clock, the frequency of the local clock is steered to match the target frequency of the reference clock so that their periodic triggering signals, typically 1PPS, are aligned in time. The frequency of a clock may be steered by modifying the voltage, also called steering voltage, inputted to the clock : this is typically done on Voltage Controlled Oscillators, noted VCO. Typically closed-loop control schemes, based on a controller, are used to perform the steering of the local clock. The controller constants determine the speed and stability of convergence of the steering process. Determining the optimal controller constants is a tremendous task, especially because they have to be updated regularly during the disciplining process. By "optimal controller constants", it is meant the constants which allow an optimal disciplining of the local clock. An optimal disciplining is a fast and stable steering of the frequency of the local clock to match the targeted frequency. Typically, PID controllers, for "proportional-integral-derivative" controllers, in a closed-loop control scheme to perform the steering of a local clock. However, even with a PID controller, it is difficult to obtain an optimal disciplining of a clock with a closed-loop control scheme based on a PID controller. Figure 1 illustrates various variations of the steering voltage during a disciplining of a clock when performed with a PID controller. The vertical axis 10 represents the oscillator frequency, driven by the steering voltage, and the horizontal axis 20 represents the time. The line 30 represents the value of the targeted reference frequency, driven by a target steering voltage to discipline the clock. The curve 40 represents a first disciplining of a clock wherein the constants are not optimal because of undershooting, i.e. the convergence is too slow, or long in time. The curve 50 represents a second disciplining of a clock wherein the constants are not optimal because of overshooting, i.e. the convergence is unstable. The curve 60 represents a third disciplining of a clock wherein the constants are optimal. There are techniques to accelerate the convergence with PID controllers by adapting the constants during the convergence process, such as recursive least square, noted RLS, algorithm. R. Fahmy, R. Badr, and F. Rahman, "Adaptive PID controller using RLS for siso stable and unstable systems," Advances in Power Electronics, vol. 2014, 10 2014 discloses an example of such technique. However, the optimal PID constants will depend on how much the frequency needs to be steered. Thus, the constants that will be optimal for one disciplining case, i.e., with a target frequency shift, will not be optimal for another disciplining case, i.e., with a different frequency shift. Even if adaptive methods are used, the parameters of the adaptation need to be tuned. All this is typically done by trial and error techniques aiming for efficient parameters. The curve 70 represents a fourth disciplining of a clock which is an ideal disciplining which cannot be obtained with a disciplining based on a PID controller.

Ceccarelli, Andrea, et al., "Time and Resilient Master Clocks in Cyber-Physical Systems", SAT 2015 18th International Conference, Austin, USA, September 24-27, 2015 (XP047365211) discloses a method for disciplining a local clock with a reference clock. US 2023/315025 A1 discloses a method for enhancing synchronization between clocks residing in separate locations, involving determining time offset and/or frequency offset between first and second clocks, and transmitting indication of determined time offset and/or frequency offset output from model to node. US 2013/046497 A1 discloses a method for synchronizing a device which involves generating time error using predicted correction signal to assess suitability of trained mathematical model for disciplining drift in oscillator.

In this context, there still exists a need for an improved solution to discipline a local clock with a reference clock.

### SUMMARY OF THE INVENTION

There is therefore a need to provide a method which steers the local clock into compliance with the reference clock faster than with the existing solutions and without any oscillations due to an overshooting. The disciplining is achieved with an open loop control scheme based on an inverse dynamics oscillator model. Therefore, the steering voltage may be driven along an optimal path which allows an optimal disciplining. Such path is illustrated in figure 1 by the curve 70.

According to a first aspect of the invention, this need is satisfied by providing a method for disciplining a local clock with a reference clock, according to claim 1.

The method according to the first aspect of the invention may also have one or more of the following characteristics, considered individually or according to any technically possible combinations thereof:
- the inverse dynamics model also takes as input a constraint to limit a speed of the disciplining of the local clock.

Another aspect of the invention relates to a computer program according to claim 3.

Another aspect of the invention relates to a computer readable storage medium according to claim 4.

Another aspect of the invention relates to a system according to claim 5.

A further aspect relates to an aircraft comprising the system and a local clock to be disciplined.

### BRIEF DESCRIPTION OF THE FIGURES

Other characteristics and advantages of the invention will become clear from the description that is given thereof below, by way of indication and in no way limiting, with reference to the appended figures, among which:
- Figure 1 illustrates various examples of variation of the steering voltage during a disciplining of a clock.
- Figure 2 is a synoptic scheme illustrating the steps of an example of the method for disciplining a local clock with a reference clock according to the invention.
- Figure 3 is a synoptic scheme illustrating the steps of an example of the method of machine learning according to the invention.
- Figure 4 is a diagram of an example of a neural network architecture compatible with the invention.

### DETAILED DESCRIPTION

For greater clarity, identical or similar elements are marked by identical reference signs in all of the figures.

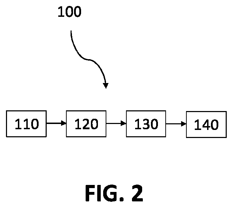

Figure 2 is a synoptic scheme illustrating the steps of an example of the method 100 for disciplining a local clock with a reference clock according to the invention.

The method 100 is configured for disciplining, or re-disciplining, a local clock with a reference clock. The term "disciplining" is used indistinctively in the present application for disciplining or re-disciplining. re-disciplining is the process of disciplining a clock which has been already disciplined at least one time. The local clock comprises an oscillator. The method 100 may be used when the frequency of the oscillator of the local clock has drifted away from the frequency of the oscillator of the reference clock. The frequency of the oscillator of the reference clock is the targeted frequency.

The method 100 is "computer implemented". "Computer-implemented" means that the steps, or at least some of the steps, are performed by at least one computer or processor or other similar system. Thus, steps are performed by the computer, possibly fully automatically, or, semi-automatically. In examples, the triggering of at least some of the steps of these methods may be performed by user-computer interaction. The level of user-computer interaction required may depend on the level of automation intended and balanced against the need to implement the user's wishes. In examples, this level may be user defined and/or may be predefined. For example, the triggering of the method 100 may be performed by a user interaction. The triggering of the method 100 may also be performed automatically, for example periodically.

A typical example of a computer implementation of a method is to execute the method with a system adapted for the purpose. A system may be configured to implement all the steps of the method and/or its various embodiments according to the invention. To this end, the system comprises a memory and a computing unit, the memory being configured to store instructions which, when executed by the computing unit, cause the computing unit to implement the steps of the method according to the invention and/or the different embodiments of the method according to the invention. The system further comprises at least one network interface for communicating with remote entities, i.e. for sending and receiving data to said entities, via at least one network. The entities may be servers or computers storing data. The data may be stored by the same server or by different servers/databases. As an example, a system adapted to the purpose may be a management system of a local clock and more specifically a management system of a local clock in an aircraft. The system may have access to a reference clock which is distant from the local clock, for example which is not in the aircraft. The system may have stored in a non-volatile memory the inverse dynamics model of the local clock.

The computer program may comprise instructions executable by a computer, the instructions comprising means for causing the above system to perform the methods. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the methods by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the methods.

The method 100 comprises a first step 110 of obtaining a time from the reference clock and a temperature of the local clock. The term "obtaining", in the present application, means "receiving" and/or "measuring" and/or "calculating". The time of the reference clock may be received, by the system implementing the method 100, via a network. The network may be a wired network, such as an Ethernet network, analog links or a wireless network. The time of the reference clock may comprise the date and the time. The date may be given in the format "day-month-year" and the time may be given in the format "hour-minute-second-millisecond". The time of the reference clock may also comprise information about the time zone of the reference clock. The temperature of the local clock may be the environmental temperature of the local clock and/or the temperature of a part of the local clock. The temperature of the local clock may be measured directly by the system implementing the method 100 or may be received from a system dedicated to measure the temperature of the local clock. The temperature of the local clock is expressed in Celsius degrees, noted "°C". Any possible working temperature of the local clock may be compatible with the method 100, for example between -40°C and 75°C.

The method 100 comprises a second step 120 of calculating a targeted frequency of the oscillator of the local clock based on the time from the reference clock. The targeted frequency is the required frequency of the oscillator of the local clock in order to discipline the local clock with the reference clock. Hence, the targeted frequency of the oscillator of the local clock is determined based on the obtained time from the reference clock. The targeted frequency of the oscillator of the local clock is also determined based on the time of the local clock.

The third step 130 of the method 100 is based on an inverse dynamics model of the local clock. The inverse dynamics model may have been obtained before the beginning of the method 100 or during any step of the method 100 before the beginning of the third step 130. The inverse dynamics model of the local clock takes as inputs an input temperature of the local clock and an input targeted frequency of an oscillator of the local clock. The inverse dynamics model outputs a correspondent steering voltage to apply to the local clock in order to obtain the input targeted frequency of the oscillator of the local clock. The inverse dynamics model is a mathematical model, for example embodied in an artificial neural network, which predicts the steering voltage to apply to the local clock in order to obtain the targeted frequency of an oscillator of the local clock. The inverse dynamics model also takes as input the temperature of the local clock. Indeed, the temperature influences the frequency of the oscillator of a clock. By taking into account the temperature of the local clock, the inverse dynamics model is therefore more accurate. The aging of the local clock is not considered by the inverse dynamics model as the time scale of its influence is much longer compared to the disciplining process. Thus, the impact of aging can be neglected during a disciplining of a clock. But the inverse dynamics model can be updated with the new data during operation in order to take into consideration how the model evolves with the aging of the clock.

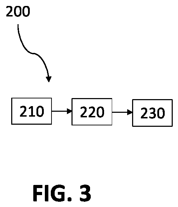

In examples, the inverse dynamics model is a trained neural network. Figure 3 is a synoptic scheme illustrating the steps of an example of a method 200 of machine learning according to the invention. This method 200 may be used to obtain such trained neural network.

The method 200 comprises a first step 210 of obtaining a neural network to train. The obtained neural network takes as inputs an input temperature of the local clock and an input targeted frequency of the oscillator of the local clock. The neural network, once trained, outputs a steering voltage to apply to the local clock in order to obtain the input targeted frequency of the oscillator of the local clock.

The method 200 comprises a second step 220 of obtaining a set of training data. The training data comprises a set of control cases. A control case is a time series of experiments. The experiments of a control case are ordered in time. For example, the first experiment is ordered first, the second experiment is ordered second, etc. And the last experiment is ordered the last. Each experiment consists of inputting a voltage to the local clock and measuring the drift of the frequency of the oscillator. The temperature of the local clock is also measured for each experiment, and in order to capture the model, experiments at different temperature values may be performed. To obtain a control case, a series of experiments are performed and then ordered in time. For example, for each temperature of the local clock comprised between -45°C and 75°C, various values of voltages may be inputted to the local clock. The voltages may be comprised between the working range of the voltage controller oscillator. In examples, the training dataset may be obtained from a set of experiments performed with different control parameters, different set points and various temperatures of the local clock. The control parameters may be the constants of a PID controller. The set points may be chosen at different distances in frequency from the actual oscillator frequency of the local clock. For each experiment, a scanning is performed in order to obtain at least the voltage applied to the local clock, the temperature of the local clock and the drift of the oscillator of the local clock. It is worth noting that the controller constants are only used for extracting the data, different constants will be used in the process of extracting data for the training dataset. But once the training dataset is collected, the controller constants used are not relevant and therefore not comprised in the training dataset. Indeed, the method 100 is an open loop scheme for disciplining a clock which is not based on a PID controller. By having time series of experiments, the training data also contains information regarding how the behaviour of the local clock evolves and is related to its past evolution. The terms "behaviour of the local clock" refers here to how an input steering voltage applied to the local clock modifies the frequency of its oscillator at a certain temperature of the local clock.

The method 200 comprises a third step 230 of training the neural network. The training of the neural network is based on the set of training data obtained in step 220. The training of the neural network is supervised. A supervised training, also called supervised learning, is defined by its use of labeled datasets to train the neural network. These datasets are designed to train or "supervise" the neural network predicting outcomes accurately. Using labeled inputs and outputs, the neural network can measure its accuracy and learn over time to predict the steering voltage to apply to the local clock in order to obtain the input targeted frequency of the oscillator of the local clock.

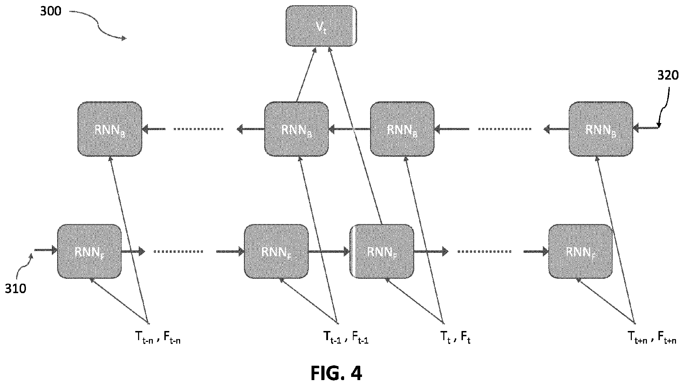

In examples, the neural network is a bi-directional recurrent neural network. Figure 4 illustrates an example of bi-directional recurrent neural network. A bi-directional recurrent neural network 300 allows the output from some nodes to affect subsequent input to the same nodes. The bi-directional recurrent neural network comprises a forward neural path 310 and a backward neural path 320. During the training 230 of the bi-directional recurrent neural network, for each experiment, the forward neural path receives the set of data of the experiments ordered before in the time series of the said experiment. In the meantime, the backward neural path receives the set of data of the experiments ordered after in the time series of the said experiment. In other words, for each experiment, the set of data of the past experiments are used in the forward neural path and the set of data of the future experiments are used in the backward neural path. In this example, the bi-directional recurrent neural learns the inverse model of the local clock to optimally control the process of disciplining the oscillator.

The method 200 of machine learning may therefore be used to obtain an inverse dynamics model of the local clock compatible with the method 100 for disciplining a local clock with a reference clock. The inverse dynamics model is used in the third step 130 of the method 100 for obtaining a steering voltage adapted for disciplining the local clock with the reference clock in an optimal way.

The method 100 comprises a third step 130 of inputting, to the inverse dynamics model of the local clock, the targeted frequency of the oscillator of the local clock and the temperature of the local clock. The inverse dynamics model of the local clock therefore outputs a steering voltage to apply to the local clock to obtain the targeted frequency of the oscillator of the local clock.

The method 100 comprises a fourth step 140 of applying the steering voltage outputted, by the inverse dynamics model, to the local clock.

In examples, the inverse dynamics model also takes as input an additional constraint to limit a speed of the disciplining of the local clock. The additional constraint may be applied with for instance within a network in which the local clock acts as a reference clock to subsequent layers. For instance, in a White Rabbit protocol or other protocols that require the local oscillator frequency of the clock (which is acting as reference or leader to subsequent layers in the network) is maintained with a certain alignment threshold with these other subsequent local clocks in the network (that are its followers). Thus, there are cases in which an "optimal" disciplining process is not the fastest and more stable but rather "the faster and more stable" capable of performing the disciplining without "large instant changes" in the local oscillator frequency, i.e., changes that are in compliance with the follower clocks capability of staying in "sync" with this leader clock, that is being disciplined to another reference. In other words, this additional constraint is especially useful when the local clock to discipline is in the meantime the reference clock of one or more local clocks which are in a "lock" state. By limiting the speed of the disciplining of the local clock, this additional constraint ensures that the disciplining of a local clock allows its own one or more local clocks may be maintained in a "lock" state. The additional constraint may therefore be dependent on the specifications of at least one local clock of the clock to discipline.

The method 100 for disciplining a local clock with a reference clock may also be complemented with a closed loop control method for disciplining a clock. Any known closed loop control method for disciplining a clock may be used. For example, this closed loop control method for disciplining a clock may be used in specific cases such as when large errors are detected between the local clock and the reference clock. Then when the error becomes within the range in which the inverse dynamics model has been captured, i.e., trained, the method 100 can be applied to optimize the rest of the disciplining process.

## Claims

1. Computer implemented method (100) for disciplining a local clock with a reference clock, the local clock comprising an oscillator and the method (100) comprising:
- Obtaining (110) a time from the reference clock, a temperature of the local clock and an inverse dynamics model of the local clock, the obtaining of the inverse dynamics model of the local clock comprising the sub-steps:
∘ Obtaining (210) a bi-directional recurrent neural network comprising a forward neural path and a backward neural path, the bi-directional recurrent neural network taking as inputs an input temperature of the local clock and an input targeted frequency of the oscillator of the local clock and outputting a steering voltage to apply to the local clock in order to obtain the input targeted frequency of the oscillator of the local clock,
∘ Obtaining (220) a set of training data comprising a set of control cases, each control case of the set of control cases comprising a time series of experiments being ordered in time, each set of data for each experiment comprising the temperature of the local clock, the steering voltage applied to the local clock and a respective modification of a frequency of the oscillator of the local clock obtained by applying the steering voltage to the local clock, and
∘ Training (230), in a supervised way, the neural network with the set of training data, for each experiment of the time series of each control case:
• Using, in the forward neural path, the set of data of the experiments coming before in time to the said each experiment, and
• Using, in the backward neural path, the set of data of the experiments coming after in time to the said each experiment,
- Calculating (120) a targeted frequency of the oscillator of the local clock based on the time from the reference clock,
- Inputting (130) to the inverse dynamics model of the local clock, the targeted frequency of the oscillator of the local clock and the temperature of the local clock, and outputting a steering voltage to apply to the local clock to obtain the targeted frequency of the oscillator of the local clock, and
- Applying (140) the steering voltage to the local clock.

2. Method (100) of claim 1 wherein the inverse dynamics model also takes as input a constraint to limit a speed of the disciplining of the local clock.

3. A computer program including instructions which, when the program is executed by a processor, cause the processor to perform the method (100, 200) of any one of the precedent claims.

4. A computer readable storage medium having recorded thereon the computer program of the precedent claim, which, when executed by a processor, causes the processor to perform the method of any of claims 1 or 2.

5. A system comprising a processor coupled to a memory having stored thereon the computer program of claim 3, which, when executed by the processor, causes the processor to perform the method of any of claims 1 or 2.

6. Aircraft comprising a system of claim 5 and a local clock to be disciplined.

## Patentansprüche

1. Computerimplementiertes Verfahren (100) zum Synchronisieren eines lokalen Taktgebers mit einem Referenztaktgeber, wobei der lokale Taktgeber einen Oszillator umfasst und das Verfahren (100) umfasst:
- Erhalten (110) einer Uhrzeit aus dem Referenztaktgeber, einer Temperatur des lokalen Taktgebers und eines inversen dynamischen Modells des lokalen Taktgebers, wobei das Erhalten des inversen dynamischen Modells des lokalen Taktgebers die folgenden Teilschritte umfasst:
∘ Erhalten (210) eines bidirektionalen rekurrenten neuronalen Netzes, das einen direkten neuronalen Pfad und einen inversen neuronalen Pfad umfasst, wobei das bidirektionale rekurrente neuronale Netz als Eingaben eine Eingangstemperatur des lokalen Taktgebers und eine Eingangs-Zielfrequenz des Oszillators des lokalen Taktgebers entgegennimmt und als Ausgabe eine Ansteuerspannung erzeugt, die am lokalen Taktgeber angelegt werden soll, um die Eingangs-Zielfrequenz des Oszillators des lokalen Taktgebers zu erhalten,
∘ Erhalten (220) eines Trainingsdatensatzes, der einen Satz von Steuerungsfällen umfasst, wobei jeder Steuerungsfall des Satzes von Steuerungsfällen eine zeitlich geordnete Zeitreihe von Erfahrungen umfasst, wobei jeder Datensatz für jede Erfahrung die Temperatur des lokalen Taktgebers, die am lokalen Taktgeber angelegte Steuerspannung und eine jeweilige Änderung einer Frequenz des Oszillators des lokalen Taktgebers umfasst, die durch Anlegen der Steuerspannung am lokalen Taktgeber erzielt wird, und
∘ das überwachte Trainieren (230) des neuronalen Netzes mit dem Trainingsdatensatz für jede Erfahrung der Zeitreihe jedes Steuerungsfalls:
• Verwendung des Datensatzes der zeitlich früheren Erfahrungen in Bezug auf die jeweilige Erfahrung im vorwärtsgerichteten neuronalen Pfad, und
• Verwendung des Datensatzes der zeitlich späteren Erfahrungen in Bezug auf die jeweilige Erfahrung im rückwärtsgerichteten neuronalen Pfad,
- die Berechnung (120) einer Sollfrequenz des lokalen Taktoszillators auf der Grundlage der vom Referenztaktgeber gelieferten Uhrzeit,
- die Eingabe (130) des lokalen Taktgebers, der Sollfrequenz des lokalen Taktoszillators und der Temperatur des lokalen Taktgebers in das inverse dynamische Modell sowie die Ausgabe einer Ansteuerspannung, die am lokalen Taktgeber angelegt werden muss, um die Sollfrequenz des lokalen Taktoszillators zu erreichen,
und
- Anlegen (140) der Ansteuerspannung am lokalen Taktgeber.

2. Verfahren (100) nach Anspruch 1, bei dem das inverse dynamische Modell zusätzlich eine Eingangsgröße zur Begrenzung der Ansteuerungsgeschwindigkeit des lokalen Taktgebers aufnimmt.

3. Computerprogramm, das Befehle umfasst, die, wenn das Programm von einem Prozessor ausgeführt wird, den Prozessor veranlassen, das Verfahren (100, 200) eines der vorstehenden Ansprüche durchzuführen.

4. Computerlesbarer Speicherträger, auf dem das Computerprogramm des vorstehenden Anspruchs gespeichert ist, das, wenn es von einem Prozessor ausgeführt wird, den Prozessor veranlasst, das Verfahren eines der Ansprüche 1 oder 2 auszuführen.

5. System, das einen Prozessor umfasst, der mit einem Speicher gekoppelt ist, auf dem das Computerprogramm gemäß Anspruch 3 gespeichert ist, das, wenn es vom Prozessor ausgeführt wird, den Prozessor veranlasst, das Verfahren gemäß einem der Ansprüche 1 oder 2 auszuführen.

6. Flugzeug, das ein System nach Anspruch 5 und einen zu synchronisierenden lokalen Taktgeber umfasst.

## Revendications

1. Procédé (100), mis en œuvre par ordinateur, de synchronisation d'une horloge locale avec une horloge de référence, l'horloge locale comprenant un oscillateur et le procédé (100) comprenant les étapes suivantes :
- Obtenir (110) une heure de l'horloge de référence, une température de l'horloge locale et d'un modèle de dynamique inverse de l'horloge locale, l'obtention de ce modèle comprend les sous-étapes suivantes :
∘ Obtenir (210) un réseau neuronal récurrent bidirectionnel comprenant un chemin neuronal avant et un chemin neuronal arrière, le réseau neuronal récurrent bidirectionnel prenant comme entrées une température d'entrée de l'horloge locale et une fréquence cible d'entrée de l'oscillateur de l'horloge locale et produisant une tension de pilotage à appliquer à l'horloge locale afin d'obtenir la fréquence cible d'entrée de l'oscillateur de l'horloge locale,
∘ Obtenir (220) un ensemble de données d'entraînement comprenant un ensemble de cas de contrôle, chaque cas de contrôle de l'ensemble de cas de contrôle comprenant une série chronologique d'expériences ordonnées dans le temps, chaque ensemble de données pour chaque expérience comprenant la température de l'horloge locale, la tension de commande appliquée à l'horloge locale et une modification respective de la fréquence de l'oscillateur de l'horloge locale obtenue en appliquant la tension de commande à l'horloge locale, et
∘ Entraîner (230), de manière supervisée, le réseau neuronal avec l'ensemble des données d'entraînement, pour chaque expérience de la série temporelle de chaque cas de contrôle :
- Utiliser, dans la voie neuronale directe, l'ensemble des données des expériences précédant temporellement chaque expérience, et
- Utiliser, dans la voie neuronale inverse, l'ensemble des données des expériences suivant temporellement chaque expérience.
- Calculer (120) la fréquence cible de l'oscillateur de l'horloge locale en fonction de l'heure de l'horloge de référence ;
- Fournir en entrée (130), dans le modèle de dynamique inverse de l'horloge locale, la fréquence cible de l'oscillateur et la température de l'horloge locale, et génération d'une tension de commande à appliquer à l'horloge locale pour obtenir la fréquence cible de son oscillateur, et
- Appliquer (140) la tension de commande à l'horloge locale.

2. Procédé (100) de la revendication 1 dans lequel le modèle de dynamique inverse prend également en entrée une contrainte visant à limiter la vitesse de la discipline de l'horloge locale.

3. Programme informatique comprenant des instructions qui, lorsque le programme est exécuté par un processeur, amènent le processeur à exécuter la méthode (100, 200) de l'une des revendications précédentes.

4. Support de stockage lisible par ordinateur sur lequel est enregistré le programme informatique de la revendication précédente, qui, lorsqu'il est exécuté par un processeur, amène le processeur à exécuter la méthode de l'une quelconque des revendications 1 ou 2.

5. Système comprenant un processeur couplé à une mémoire sur laquelle est stocké le programme informatique de la revendication 3, qui, lorsqu'il est exécuté par le processeur, amène le processeur à exécuter la méthode de l'une quelconque des revendications 1 ou 2.

6. Aéronef comprenant un système selon la revendication 5 et une horloge locale à discipliner.
